Europäisches Patentamt

European Patent Office

Office européen des brevets

(19)

(11) **EP 0 822 423 B1**

(12) **EUROPÄISCHE PATENTSCHRIFT**

(45) Veröffentlichungstag und Bekanntmachung des Hinweises auf die Patenterteilung:
**09.11.2005  Patentblatt 2005/45**

(51) Int Cl.$^7$: **G01S 13/86**

(21) Anmeldenummer: **97111993.8**

(22) Anmeldetag: **15.07.1997**

(54) **Verfahren zur Detektion eines Zieles und Anordnung zur Durchführung des Verfahrens**

Method and system for detecting a target

Procédé et système pour détecter une cible

(84) Benannte Vertragsstaaten:
**DE FR GB**

(30) Priorität: **30.07.1996  DE 19630717**

(43) Veröffentlichungstag der Anmeldung:
**04.02.1998  Patentblatt 1998/06**

(73) Patentinhaber: **EADS Deutschland GmbH**
**81663 München (DE)**

(72) Erfinder: **Tospann, Franz-Josef**
**89261 Holzheim (DE)**

(74) Vertreter: **Meel, Thomas et al**
**Patentassessor,**
**c/o Dornier GmbH**
**L H G**
**88039 Friedrichshafen (DE)**

(56) Entgegenhaltungen:
**WO-A-97/21982          US-A- 5 005 147**
**US-A- 5 365 236**

- **HALL L D ET AL: "AN INTRODUCTION TO MULTISENSOR DATA FUSION" PROCEEDINGS OF THE IEEE,US,IEEE. NEW YORK, Bd. 85, Nr. 1, Januar 1997 (1997-01), Seite 6-23 XP000686448 New York, NY, USA ISSN: 0018-9219**

**Beschreibung**

Die Erfindung betrifft ein Verfahren zur Detektion eines Zieles mittels eines Radarsensors sowie eines bildgebenden Sensors nach dem Oberbegriff des Patentanspruchs 1 und eine Anordnung zur Durchführung des Verfahrens nach dem Oberbegriff des Patentanspruchs 7.

Im Rahmen dieser Patentanmeldung bezeichnet ein Radarsensor einen Sensor, der in einem vorgebbaren Winkelbereich (mit vorgebbarer Winkelauflösung), bezogen auf den Standort des Sensors, das heißt der Sende-/Empfangsantenne, zumindest eine Entfernungsbestimmung eines Zieles ermöglicht. Ein solcher Sensor besteht beispielsweise aus einer an sich bekannten Radar-Anlage, bei der mittels einer Sende-/ Empfangsantenne Radar-Wellen ausgesandt und/oder empfangen, ausgewertet und angezeigt werden, vorzugsweise auf einem elektronisch arbeitenden Sichtschirm, z.B. einem Monitor.

Dagegen bezeichnet ein bildgebender Sensor einen Sensor, der beispielsweise von einem zu überwachenden Gebiet, beispielsweise einer Landschaft, lediglich deren Projektion als zweidimensionale Abbildung liefert, vorzugsweise ebenfalls auf einem elektronisch arbeitenden Sichtschirm, beispielsweise einem (Fernseh-)Monitor. Ein solcher bildgebender Sensor umfaßt beispielsweise eine im sichtbaren und/oder infraroten und/oder ultravioletten Wellenlängenbereich arbeitende Fernsehkamera. Diese liefert von dem zu überwachenden Gebiet eine zweidimensionale Abbildung (Projektion), die an sich keine Information über die Entfernung der dort dargestellen bewegten Ziele enthält. Mit einem solchen Sensor ist eine Entfernungsbestimmung eines Zieles lediglich indirekt möglich, sofern die Eigenschaften, beispielsweise Brennweite, Tiefenschärfebereich, der abbildenden Optik bekannt sind.

Es ist nun naheliegend, ein zu überwachendes Gebiet, beispielsweie eine Landschaft, gleichzeitig von einem Radarsensor und einem bildgebenden Sensor abzutasten und die jeweiligen Darstellungen in Kombination auszuwerten. Damit ist vorteilhafterweise eine Klassifikation und/oder Identifikation eines von beiden Sensoren erfaßten Zieles möglich. Beispielsweise können mit einem im Mikrowellenbereich arbeitenden Radarsensor nur bewegte (Radar-)Ziele erfaßt werden. Von diesen ist dann im allgemeinen lediglich die Geschwindigkeit und die (radiale) Entfernung, bezogen auf den Standort des Radarsensors, bestimmbar. Eine Klassifikation und/ oder Identifikation eines bestimmten Radarzieles ist dagegen mit dem optischen Sensor möglich. Denn wird beispielsweise eine im sichtbaren Wellenlängenbereich arbeitende Fernsehkamera mit geeignetem Objektiv auf das erfaßte Radarziel gerichtet, so ist erkennbar, ob dieses beispielsweise ein fahrendes Motorrad oder ein fahrender Personen- oder Lastkraftwagen ist. Denn alle diese Ziele können bei einem Radarsensor dieselbe ununterscheidbare Zielinformation liefern.

Eine derartige Auswertung der von unterschiedlichen Sensoren erzeugten Information ist in nachteiliger Weise aufwendig, da entweder eine Person als Auswerter eingesetzt werden muß oder alternativ dazu eine technisch aufwendige Auswertelektronik.

Der Erfindung liegt daher die Aufgabe zugrunde, ein gattungsgemäßes Verfahren anzugeben, mit dem in kostengünstiger Weise eine schnelle und automatische Auswertung der Informationen eines Radarsensors sowie eines bildgebenden Sensors möglich wird. Der Erfindung liegt außerdem die Aufgabe zugrunde, eine Anordnung zur Durchführung des Verfahrens anzugeben.

Diese Aufgabe wird gelöst durch die in den kennzeichnenden Teilen der Patentansprüche 1 und 7 angegebenen Merkmale.

Vorteilhafte Ausgestaltungen und/oder Weiterbildungen sind den weiteren Ansprüchen entnehmbar.

Ein erster Vorteil der Erfindung besteht darin, daß durch die kombinierte Auswertung der Informationen der einzelnen Sensoren eine erheblich größere räumliche Auflösung erreicht wird bezüglich der an sich vorhandenen der einzelnen Sensoren.

Ein zweiter Vorteil besteht darin, daß durch die Auswahl der Sensoren, insbesondere des Spektralbereiches des bildgebenden Sensors, eine Klassifikation und/oder Identifikation eines (Radar-)Zieles möglich ist.

Ein dritter Vorteil besteht darin, daß insbesondere mit der Klassifikation eines Zieles eine sehr hohe Zuverlässigkeit ereichbar ist, das heißt, es ist eine sehr geringe Falschalarmrate erreichbar.

Ein vierter Vorteil besteht darin, daß neben einer automatischen Kombination und Auswertung der Informationen (Signale) der Sensoren zusätzlich eine entsprechende Darstellung auf einem Sichtschirm (Monitor) möglich ist, so daß eine Person (Beobachter) diesen Kombinations- und/oder Auswertevorgang verfolgen kann.

Weitere Vorteile ergeben sich aus der nachfolgenden Beschreibung.

Die Erfindung wird im folgenden anhand eines Ausführungsbeispiels näher erläutert, das für Überwachungs- sowie Klassifikations- und/oder Identifikationsaufgaben verwendbar ist, insbesondere im militärischen Bereich.

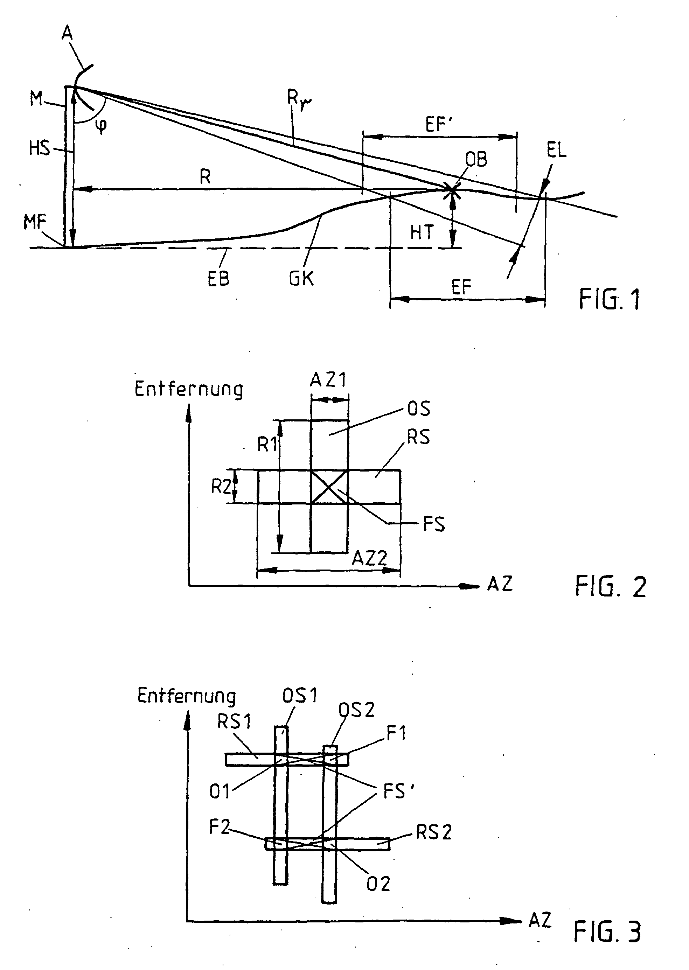

Insbesondere dort ist es erforderlich, mittels einer stationären oder beweglichen Bodenstation (einer auf dem Erdboden befindlichen Station), die sowohl einen Radarsensor, der beispielsweise im Mikrowellenbereich arbeitet, als auch einen bildgebenden Sensor, der vorzugsweise ein Wärmebild erzeugen kann, besitzt, ein Ziel genau zu bestimmen, das heißt, mit einer möglichst geringen, vorgebbaren Falschalarmrate. Dieses wird anhand der schematisch dargestellten Figuren 2 und 3 näher erläutert.

Der bildgebende Sensor (Wärmebildsensor) besitzt eine durch seine Ausführungsform bedingte maximale Reichweite (in der Entfernungsrichtung) und in Elevations- und Azimutrichtung (parallel zum Erdboden) eine vorgebbare Winkelauflösung.

Der bei der Bodenstation ebenfalls befindliche Radarsensor habe in Entfernungsrichtung eine maximale Reichweite, die ungefähr derjenigen des bildgebenden Sensors entspricht. Beide Sensoren haben im wesentlichen dieselbe Haupt(blick)-richtung (Hauptachse). Die von dem Radarsensor erreichbare Winkelauflösung, insbesondere in Azimutrichtung, ist im allgemeinen wesentlich kleiner als diejenige des bildgebenden Sensors, hier des Wärmebildsensors. Der Grund liegt darin, daß der Radarsensor aus Gründen der Handhabung, insbesondere bei einer mobilen Bodenstation, eine geometrisch möglichst klein dimensionierte Sende-/Empfangsantenne besitzen sollte.

FIG. 2 zeigt für einen bildgebenden Sensor 0S und einen Radarsensor RS die sich ergebenden Auflösungszellen in der Azimut(AZ)-Entfernungsebene (Ordinate). Dabei bedeuten

AZ1   der kleinstmögliche Azimut-Winkel (Azimutauflösung) des bildgebenden Sensors OS

R1    die kleinstmögliche Entfernungsauflösung des bildgebenden Sensors OS

AZ2   der kleinstmögliche Azimut-Winkel (Azimutauflösung) des Radarsensors RS

R2    die kleinstmögliche Entfernungsauflösung des Radarsensors RS.

Es sei beispielsweise
     R2 : R1 = 1 : 10 und AZ1 : AZ2 = 1 :10.

Es ist ersichtlich, daß der gekreuzt dargestellte Überschneidungsbereich, der auch Fusionsfläche FS genannt wird, eine Aziumut-Entfernungs-Auflösungszelle darstellt, die wesentlich kleinere Dimensionen (AZ1, R2) besitzt als diejenigen der einzelnen Sensoren OS, RS. In der Fusionsfläche FS ist außerdem in vorteilhafter Weise eine umfangreiche Information über ein dort erfaßtes Ziel vorhanden. Für diese Fusionsfläche FS kann beispielsweise das Doppler-Signal des Radarsensors ausgewertet werden und dieses in vorgebbarer Weise, beispielsweise einer logischen "UND"-Verknüpfung, mit dem Wärmebild des bildgebenden Sensors verknüpft werden. Es kann beispielsweise erst auf ein zu verfolgendes Ziel erkannt werden, wenn beide Informationen jeweils einen zugehörigen vorgebbaren Schwellwert überschreiten.

Außerdem ist bei einem in der Fusionsfläche FS befindlichen Ziel in vorteilhafter Weise noch eine Klassifikation und/oder Identifikation möglich. So kann beispielsweise ein auf dem Erdboden befindlicher Hubschrauber, mit laufendem Motor und Rotor, von einem stehenden Lastkraftwagen, mit laufendem Motor, im Radar-Echosignal unterschieden werden aufgrund der unterschiedlichen Modulationen, die lediglich von dem rotierenden Hubschrauber-Rotor erzeugt werden. Mittels Auswertung dieser beispielhaft erwähnten Modulationen ist sogar eine Identifikation des Hubschraubers möglich, das heißt, eine Feststellung des Typs. Ähnliche Überlegungen gelten für die Auswertungen der Informationen des bildgebenden Sensors, hier des Wärmebildsensors. Denn mit diesem kann beispielsweise die Temperatur des Zieles gemessen und ausgewertet werden, sofern dieses erforderlich ist.

Bei einer solchen kombinierten Auswertung der Informationen (Signale) des Radarsensors sowie des bildgebenden Sensors (Wärmebildsensors) können störende Falschalarme auftreten, das heißt, bei der kombinierten Auswertung erscheint ein Ziel, das nicht detektiert werden soll. Dieses wird anhand der FIG. 3 näher erläutert. Dort sind vier Ziele O1, O2, F1, F2 dargestellt. RS1 bezeichnet eine erste Radarauflösungszelle, welche die in ihr liegenden Ziele O1, F1 zwar erfaßt, aber nicht getrennt detektieren (auflösen) kann. RS2 bezeichnt eine zweite Radarauflösungszelle, welche die in dieser liegenden Ziele F2, O2 erfaßt, aber nicht auflösen kann. OS1 bezeichnet eine erste optische Auflösungszelle (des bildgebenden Sensors), welche die Ziele F2, O1 erfaßt, aber nicht auflösen kann. OS2 bezeichnet eine zweite optische Auflösungszelle, welche die Ziele O2, F1 erfaßt, aber nicht auflösen kann.

Ist nun beispielsweise das Ziel O1 ein auf dem Erdboden befindlicher Hubschrauber mit laufendem Motor und das Ziel F1 ein daneben abgestellter Lastkraftwagen mit kaltem Motor, das heißt ohne Wärmequelle, so werden die Ziele O1, F1 von dem Radarsensor als ein einziges Ziel dargestellt, da sie in derselben ersten Radarauflösungszelle RS1 liegen. Eine Unterscheidung der Ziele O1, F1 ist nun möglich mittels der im wesentlichen senkrecht zu der ersten Radarauflösungszelle RS1 angeordneten optischen Auflösungszellen OS1, OS2. Denn mittels der ersten optischen Auflösungszelle OS1 wird lediglich bei dem Ziel O1 eine Wärmequelle detektiert und nicht bei dem Ziel F1. Ein solches Ziel (F1) würde bei der erwähnten kombinierten Auswertung ("UND"-Verknüpfung) nicht erfaßt werden. Ist dagegen das Ziel F1 lediglich ein optisch erfaßbares Ziel, beispielsweise eine Radarwellen nicht reflektierende Wärmequelle, so würde das Ziel F1 von der zweiten optischen Auflösungszelle OS2 erfaßt und ausgewertet werden, denn es liegt zusätzlich im Bereich der ersten Radarauflösungszelle RS1. Das heißt, das Ziel F1 ist ein Falschziel, da es an sich keine Radarwellen reflektiert. Ein ähnlicher Zustand tritt im Bereich der dargestellten zweiten Radar-Auflösungszelle RS2 auf, wobei das mit O2 bezeichnete Ziel ein zu detekierendes Ziel bedeutet und F2 ein weiteres Falschziel bezeichnet ist.

Aus FIG. 3 ist ersichtlich, daß bei einer sogenannten Vielzielsituation, das heißt, in der Azimut-Entfernungs-Ebene liegen mehrere zu detektierende Ziele und/oder Falschziele dicht nebeneinander, eine erhebliche Verschlechterung der Azimut-Entfernungsauflösung eintritt. Denn es ist eine sich ergebende Fusionsfläche FS' vorhanden, die in FIG. 3 gekreuzt dargestellt ist und die wesentlich größer ist als die Fusionsfläche FS in der FIG. 2.

Dieser Nachteil wird bei der Detektion von Bodenzielen (auf den Erdboden befindlichen Zielen) dadurch beseitigt, daß in der Auswertung die Geländekontur (Höhenstruktur des Geländes) und das im Vergleich zum Radarsensor hohe Winkel-Auflösungsvermögen des bildgebenden Sensors, in Azimut- und Elevationsrichtung (senkrecht zur Erdoberfläche), berücksichtigt werden. Dadurch wird die insgesamt erreichbare Entfernungsauflösung erheblich vergrößert und damit die Falschalarmrate verringert, da bei einer Vielzielsituation im allgemeinen lediglich wenige Ziele denselben Abstand zu dem Radar- und bildgebenden Sensor, vorzugsweise Wärmebildsensor, besitzen. Dies wird anhand der FIG. 1 näher erläutert.

FIG. 1 zeigt einen Mast M mit der Höhe HS sowie dem (Mast-)Fußpunkt MF. Dieser befindet sich auf einer bekannten geographischen Position, die vorzugsweise durch Satelliten-Navigation bestimmt wird, in einem unebenen Gelände mit einer ansteigenden Geländekontur GK. Auf dem Gelände befindet sich ein Objekt OB, das Radarwellen reflektiert und das Wärmeausstrahlung aussendet, beispielsweise ein Lastkraftwagen mit laufendem Motor. Dieses Objekt soll genau klassifiziert und/oder identifiziert werden. Außerdem soll seine geographische Position, bezüglich des (Mast-)Fußpunktes MF möglichst genau bestimmt werden. Dazu wird auf der Spitze des Mastes, also in der bekannten Höhe HS eine Sensor-Anordnung A, bestehend aus einem Radarsensor und einem bildgebenden Sensor, vorzugsweise einem Wärmebildsensor, angebracht. Der bildgebende Sensor und der Radarsensor haben dieselbe Hauptachse (Blickrichtung). Der bildgebende Sensor hat in einem in Azimut- und Elevationsrichtung vorgebbaren Winkelbereich jeweils eine Winkelauflösung, die wesentlich größer ist als diejenige der Azimutauflösung des Radarsensors. Nachfolgend wird die Detektion des Objekts OB beschrieben.

Dabei wird zunächst von dem Radarsensor die ungefähre Richtung und die ungefähre Entfernung des Objekts OB erfaßt. Dieses ist möglich mit der Azimutauflösung AZ2 (FIG. 2) sowie der Entfernungsauflösung R2 (FIG. 2). Diese Auflösungen sind herstellungsbedingt und gelten für eine Ebene EB, auf welcher der Mast M senkrecht steht. Der Radarsensor ermittelt also gemäß FIG. 1 die (Radar-)Entfernung Rr ± EF'/2, wobei EF' das (Radar-)Entfernungsfenster in der Ebene EB bedeutet.

Mittels des an der Spitze des Mastes M angebrachten bildgebenden Sensors wird nun die Winkelposition (Azimut- und Elevationswinkel) des Objekts OB genauer bestimmt, da der bildgebende Sensor eine höhere Winkelauflösung als der Radarsensor besitzt.

Von dem Objekt OB ist nun also dessen (Radar-)Entfernung Rr sowie dessen Azimut- und Elevationswinkel bekannt. Weiterhin ist bekannt, daß sich das Objekt OB auf der Erdoberfläche, mit der Geländekontur GK, befindet. Mit diesen Meßwerten und einer geographischen Karte mit Höhenlinien (Höhenlinienkarte) ist die geographische Höhe HT des Objekts OB bezüglich des (Mast-)Fußpunktes MF bestimmbar, denn das Objekt muß auf dem Schnittpunkt der (Radar-)Entfernung Rr mit der Geländekontur GK liegen. Mit diesen Werten ist gemäß FIG. 1 durch eine in der Geometrie übliche Rechnung beispielsweise die tatsächliche Entfernung R des Objekts OB von dem Mast M bestimmbar. Aus der Höhenlinienkarte ist weiterhin die Neigung, bezogen auf die Ebene EB, des Geländes in der Umgebung des Objekts OB aus den Höhenlinien bestimmbar. Mit dem sich ergebenden Neigungswinkel wird das Entfernungsfenster EF' korrigiert und damit das tatsächliche Entfernungsfenster EF für das Gelände in der Umgebung des Objektes OB ermittelt. Es ist ersichtlich, daß bei positiver Neigung des Geländes, das heißt, vom Fußpunkt MF in Richtung des Objekts OB steigert, eine Verkleinerung des tatsächlichen Entfernungsfensters EF eintritt. Das heißt, das Objekt OB kann mit einer höheren Entfernungs-Genauigkeit bestimmt werden. Dieses ist gleichbedeutend mit einer Vergrößerung der (Entfernungs-)Auflösung.

In FIG. 1 ist weiterhin mit EL der Elevations-Öffnungswinkel des bildgebenden Sensors bezeichnet. Das tatsächliche Entfernungsfenster EF ergibt sich daher aus den Schnittpunkten der gestrichelt dargestellten Begrenzungen des Öffnungswinkels mit der Geländekontur GK in der Umgebung des Objektes OB. Der Winkel φ bezeichnet die Neigung der Hauptrichtung (Blickrichtung) der (Sensor-)Anordnung A bezüglich des Mastes M, das heißt, der Senkrechten auf die Ebene EB.

Für ein Objekt OB, das sich in einer Höhe HT auf einer zur Ebene EB parallelen Ebene (zugehöriger Neigungswinkel gleich Null) befindet, wird die Entfernung R (FIG. 1) ermittelt gemäß der Formel

$$R \pm \Delta R = ((HS - HT) \pm \Delta H) \cdot (\tan\varphi \pm \Delta\tan\varphi))$$

mit

$\Delta R = EF'/2$ = Fehler bei der Entfernungsbestimmung

$\Delta H$ = Fehler bei der Höhenbestimmung

$\Delta\tan\varphi = \tan(EL/2)$ beinhaltet den Fehler bei der Bestimmung des Winkels φ aufgrund des Öffnungswinkels EL.

Aus der Formel ist ersichtlich, daß Ungenauigkeiten (Fehler ± ΔR) bei der Entfernungsbestimmung im wesentlichen durch den Fehler ± ΔH bei der Höhenbestimmung entstehen, da der φ und der Öffnungswinkel EL bekannt sind. Aus derzeit üblichen geographischen Karten sind die Höhenlinien mit einer Absolutgenauigkeit von 5 m bestimmbar. Bei Kenntnis der gemessenen (Radar-)Entfernung Rr (FIG. 1) kann daher die Höhendifferenz HS - HT auf 1 m genau bestimmt werden, gegebenenfalls durch eine Interpolation zwischen zwei benachbarten Höhenlinien.

Hat beispielsweise der Mast M, auf dem sowohl der Radarsensor als auch der bildgebende Sensor drehbar befestigt sind, eine Höhe HS von HS = 12 m, so liefert der bildgebende Sensor in Kombination mit der beschriebenen Auswertung der (Höhenlinien-)Karteninformationen in einer Entfernung von ungefähr 5 km eine Entfernungsauflösung von ungefähr ± 400 m. Dabei ist der Elevationswinkelfehler des bildgebenden Sensors nahezu vernachlässigbar.

Die beschriebene Ermittlung der Position eines Objekts OB ist vorteilhafterweise in kostengünstiger und schneller Weise mittels einer Datenverarbeitungseinrichtung, vorzugsweise eines Mikroprozessors möglich, da lediglich einfache und daher schnelle Rechenoperationen ausgeführt werden müssen und da derzeit geographisches Kartenmaterial in digital auswertbarer Form, beispielsweise als CD-ROM, vorliegt.

Es ist zweckmäßig, zumindest die von dem Radarsensor erzeugten Daten auf einem Sichtschirm (Monitor) darzustellen und dieser Darstellung die von dem bildgebenden Sensor erzeugten Daten zu überlagern. Denn dann kann ein Beobachter die Auswertung kontrollieren und/oder beeinflussen. Besonders zweckmäßig ist es, dieser kombinierten Darstellung zusätzlich die geographische Karte auf dem Sichtschirm zu überlagern, zumindest die geographische Umgebung des Objektes OB.

Die Erfindung ist nicht auf die beschriebenen Beispiele beschränkt, sondern in vielfältiger Weise anwendbar im zivilen und militärischen Bereich.

Beispielsweise kann

- die Falschalarmrate eines Bodenradars erheblich verringert werden,

- die Zielidentifikationssicherheit erheblich erhöht werden,

- die Zieldarstellung erheblich vereinfacht werden, da lediglich eine Anzeigeeinheit erforderlich ist,

- die Identifizierungsgeschwindigkeit erheblich erhöht und dadurch die Systemreaktionszeit erheblich verkleinert werden, so daß eine sehr frühzeitige Abwehr einer möglichen Gefahr zumindest eingeleitet werden kann.

- die Zielposition mit hoher Genauigkeit im Azimut-Winkelbereich bestimmt werden.

Die beschriebene Kombination eines Radarsensors mit einem bildgebenden Sensor (Wärmebildsensor) sowie die Auswertung der Geländekontur, die vorzugsweise in digitaler Form vorliegt, ermöglicht insbesondere im militärischen Bereich eine genau arbeitende Feuerleitung, bei welcher die geographische Position möglicher Bodenziele (auf dem Erdboden befindlicher Ziele) möglichst genau ermittelt werden soll, so daß gegen diese Ziele gerichtete Gegenmaßnahmen bedarfsweise sehr schnell eingeleitet werden können. Dabei wird ausgenutzt, daß mit dem beschriebenen Verfahren eine hohe Azimutauflösung (durch den bildgebenden Sensor) und gleichzeitig eine hohe Entfernungsauflösung (durch den Radarsensor) erreichbar sind.

**Patentansprüche**

1. Verfahren zur Detektion eines Zieles mittels eines Radarsensors sowie eines bildgebenden Sensors, wobei die von beiden Sensoren gelieferten Daten ausgewertet werden und daraus zumindest die geographische Position des Zieles ermittelt wird, **dadurch gekennzeichnet,**

   - **daß** zur Detektion eines auf dem Erdboden befindlichen Zieles sowohl der Radarsensor als auch der bildgebende Sensor in einer vorgebbaren Höhe (HS) über den Erdboden angeordnet werden,

   - **daß** der Radarsensor und der bildgebende Sensor in dieselbe Hauptrichtung ausgerichtet werden,

   - **daß** der bildgebende Sensor in Azimut- und Elevationsrichtung zumindest im Bereich der Hauptrichtung eine vorgebbar größere Winkelauflösung besitzt als der Radarsensor,

   - **daß** sich mindestens eine Auflösungszelle des Radarsensors und mindestens eine Auflösungszelle des bildgebenden Sensors überschneiden und eine Fusionsfläche (FS) bilden,

   - **daß** die Detektion des Zieles in dem Bereich der Fusionsfläche (FS) durchgeführt wird,

   - **daß** Signaldarstellungen und/oder -auswertungen des Radarsensors sowie des bildgebenden Sensors zumindest für den Bereich der Fusionsfläche (FS) auf einem Sichtgerät überlagert dargestellt werden und

   - **daß** dort im Bereich der Fusionsfläche (FS) dann auf ein Ziel erkannt wird, wenn vorgebbare Eigenschaften der Signalauswertungen des Radarsensors und des bildgebenden Sensors jeweils vorgebbare Schwellwerte überschreiten.

2. Verfahren nach Anspruch 1, **dadurch gekennzeichnet,**

- **daß** mit dem Radarsensor zumindest die ungefähre Richtung und Entfernung eines Zieles ermittelt wird und

- **daß** als geographische Position des Zieles der Schnittpunkt der von dem bildgebenden Sensor ermittelten Richtung mit einer Höhenlinie der Höhenlinienkarte in dem von dem Radarsensor festgestellten Entfernungsbereich festgelegt wird.

3. Verfahren nach Anspruch 1 oder Anspruch 2, **dadurch gekennzeichnet, daß** als bildgebender Sensor ein Wärmebildsensor verwendet wird.

4. Verfahren nach einem der vorhergehenden Ansprüche, **dadurch gekennzeichnet, daß** der Radarsensor im Mikrowellenlängenbereich arbeitet.

5. Verfahren nach einem der vorhergehenden Ansprüche, **dadurch gekennzeichnet, daß** von einem in der Fusionsfläche (FS) erfaßten Ziel eine Klassifikation und/oder Identifikation durch Auswertung der Signale des Radarsensors und des bildgebenden Sensors nach vorgebbaren Merkmalen durchgeführt wird.

6. Verfahren nach einem der vorhergehenden Ansprüche, **dadurch gekennzeichnet,**

- **daß** von einem in der Fusionsfläche (FS) erfaßten Ziel eine Klassifikation und/oder Identifikation durch Auswertung der Signale des Radarsensors und des bildgebenden Sensors nach vorgebbaren Merkmalen durchgeführt wird,

- **daß** die von dem Radarsensor und dem bildgebenden Sensor erzeugten Signale mit in digitaler Form vorliegenden Daten (Höhendaten) des Zieles kombiniert werden, so daß eine genaue geographische Position des Zieles innerhalb der Fusionsfläche (FS) entsteht und

- **daß** die derart ermittelten Daten an eine Feuerleitstelle weitergeleitet werden zur bedarfsweisen Einleitung von Abwehrmaßnahmen bezüglich des Zieles.

7. Anordnung zur Durchführung des Verfahrens nach einem der vorhergehenden Ansprüche, **dadurch gekennzeichnet,**

- **daß** an der Spitze eines Mastes (M) mit vorgebbarer Höhe (HS) eine Anordnung (A), zumindest bestehend aus einer Radar-Sende-/Empfangsantenne für eine (Radar-)Zielerfassung eines Bodenziels sowie einem bilgebenden Sensor, angebracht ist,

- **daß** der Radarsensor und der bildgebende Sensor auf dieselbe Hauptrichtung ausgerichtet sind und im wesentlichen dieselbe Reichweite besitzen,

- **daß** der Radarsensor und der bildgebende Sensor um eine gemeinsame Achse, die im wesentlichen senkrecht auf der Erdoberfläche steht, schwenkbar sind und

- **daß** zur Auswertung der von den Sensoren erzeugten Signale ein gemeinsmamer Sichtschirm vorhanden ist.

8. Anordnung nach Anspruch 7, **dadurch gekennzeichnet, daß** der Mast (M) auf einem beweglichen Fahrzeug angeordnet ist.

## Claims

1. Method for detection of a target by means of a radar sensor as well as an imaging sensor, with the data supplied from the two sensors being evaluated and being used to determine at least the geographical position of the target,
   **characterized**

   - **in that** both the radar sensor and the imaging sensor are arranged at a predeterminable height (HS) above the ground in order to detect a target located on the ground,
   - **in that** the radar sensor and the imaging sensor are aligned in the same main direction,
   - **in that** the imaging sensor has predeterminably greater angular resolution in the azimuth and elevation directions, at least in the area of the main direction, than the radar sensor,
   - **in that** at least one resolution cell of the radar sensor and at least one resolution cell of the imaging sensor intersect and form a fusion surface (FS),
   - **in that** the detection of the target is carried out in the area of the fusion surface (FS),
   - **in that** signal representations and/or evaluations of the radar sensor and of the imaging sensor are displayed superimposed on a visual display unit, at least for the area of the fusion surface (FS), and
   - **in that** a target is identified in the area of the fusion surface (FS) when predeterminable characteristics of the signal evaluations of the radar sensor and of the imaging sensor each exceed predeterminable threshold values.

2. Method according to Claim 1, **characterized**

- **in that** the radar sensor is used to determine at least the approximate direction and range of a target, and
- **in that** the intersection of the direction determined by the imaging sensor with a contour line on the contour line map in the range area defined by the radar sensor is defined as the geographical position of the target.

3. Method according to Claim 1 or Claim 2, **characterized in that** a thermal imaging sensor is used as the imaging sensor.

4. Method according to one of the preceding claims, **characterized in that** the radar sensor operates in the microwave wavelength range.

5. Method according to one of the preceding claims, **characterized in that** a target which is detected in the fusion surface (FS) is classified and/or identified by evaluation of the signals in the radar sensor and from the imaging sensor on the basis of predeterminable features.

6. Method according to one of the preceding claims, **characterized**

- **in that** a target which is detected in the fusion surface (FS) is classified and/or identified by evaluation of the signals in the radar sensor and from the imaging sensor on the basis of predeterminable features,
- **in that** the signals which are produced by the radar sensor and the imaging sensor are combined with target data (height data) in digital form, so as to produce an accurate geographical position of the target within the fusion surface (FS), and
- **in that** the data determined in this way is passed to a fire control point in order to initiate defensive measures as required against the target.

7. Arrangement for carrying out the method according to one of the preceding claims, **characterized**

- **in that** an arrangement (A) comprising at least a radar transmitting/receiving antenna for a (radar) target detection of a ground target as well as an imaging sensor, is fitted to the tip of a mast (M) of predeterminable height (HS),
- **in that** the radar sensor and the imaging sensor are aligned in the same main direction and essentially have the same range,
- **in that** the radar sensor and the imaging sensor can be scanned about a common axis, which is essentially at right angles to the surface of the earth, and

- **in that** a common visual display screen is provided for evaluation of the signals produced by the sensors.

8. Arrangement according to Claim 7, **characterized in that** the mast (M) is arranged on a moving vehicle.

**Revendications**

1. Procédé de détection d'une cible au moyen d'un capteur radar ainsi qu'un capteur d'image, les données délivrées par les deux capteurs étant interprétés et au moins la position géographique de la cible en étant déterminée, **caractérisé en ce**

- **que** pour la détection d'une cible qui se trouve au sol, le capteur radar ainsi que le capteur d'image sont disposés à une hauteur (HS) pouvant être prédéfinie au-dessus du sol,
- **que** le capteur radar et le capteur d'image sont dirigés dans la même direction principale,
- **que** le capteur d'image possède, dans le sens de l'azimut et de l'élévation, au moins dans la zone de la direction principale, une résolution angulaire pouvant être prédéfinie supérieure à celle du capteur radar,
- **qu'**au moins une cellule de résolution du capteur radar et au moins une cellule de résolution du capteur d'image convergent et forment une surface de fusion (FS),
- **que** la détection de la cible est effectuée dans la zone de la surface de fusion (FS),
- **que** les représentations et/ou les interprétations des signaux du capteur radar et du capteur d'image sont représentées de manière superposée sur un appareil de visualisation au moins pour la zone de la surface de fusion (FS) et
- **qu'**une cible est détectée dans la zone de la surface de fusion (FS) si des propriétés pouvant être prédéfinies des interprétations des signaux du capteur radar et du capteur d'image dépassent à chaque fois des valeurs de seuil pouvant être prédéfinies.

2. Procédé selon la revendication 1, **caractérisé en ce**

- **qu'**au moins la direction approximative et la distance d'une cible sont déterminées avec le capteur radar et
- **que** la position géographique établie de la cible est le point d'intersection entre la direction déterminée par le capteur d'image et une ligne de hauteur de la carte des lignes de hauteur dans la zone distante déterminée par le capteur radar.

**3.** Procédé selon la revendication 1 ou 2, **caractérisé en ce que** le capteur d'image utilisé est un capteur d'image par rayonnement thermique.

**4.** Procédé selon l'une des revendications précédentes, **caractérisé en ce que** le capteur radar fonctionne dans la gamme des hyperfréquences.

**5.** Procédé selon l'une des revendications précédentes, **caractérisé en ce qu'**une classification et/ou une identification d'une cible détectée dans la surface de fusion (FS) est réalisée en interprétant les signaux du capteur radar et du capteur d'image d'après des caractéristiques pouvant être prédéfinies.

**6.** Procédé selon l'une des revendications précédentes, **caractérisé en ce**

- **qu'**une classification et/ou une identification d'une cible détectée dans la surface de fusion (FS) est réalisée en interprétant les signaux du capteur radar et du capteur d'image d'après des caractéristiques pouvant être prédéfinies,
- **que** les signaux générés par le capteur radar et le capteur d'image sont combinés avec les données (données de hauteur) de la cible présentes sous forme numérique de manière à obtenir une position géographique précise de la cible au sein de la surface de fusion (FS) et
- **que** les données ainsi déterminées sont transmises à un poste de commande de tir en vue d'initier en fonction du besoin des mesures de protection concernant la cible.

**7.** Arrangement destiné à mettre en oeuvre le procédé selon l'une des revendications précédentes, **caractérisé en ce**

- **qu'**un arrangement (A), composé au moins d'une antenne d'émission/réception radar pour une détection de cible (par radar) d'une cible au sol ainsi qu'un capteur d'image est installé au sommet d'un mât (M) ayant une hauteur (HS) pouvant être prédéfinie,
- **que** le capteur radar et le capteur d'image sont pour l'essentiel dirigés dans la même direction principale,
- **que** le capteur radar et le capteur d'image peuvent pivoter autour d'un axe commun qui est pour l'essentiel perpendiculaire à la surface de la terre et
- **qu'**il existe un écran de visualisation commun pour interpréter les signaux générés par les capteurs.

**8.** Arrangement selon la revendication 7, **caractérisé en ce que** le mât (M) est disposé sur un véhicule mobile.

FIG. 1

FIG. 2

FIG. 3